(19) Europäisches Patentamt
European Patent Office
Office européen des brevets

(11) Publication number: **0 086 643 B1**

(12) # EUROPEAN PATENT SPECIFICATION

(45) Date of publication of patent specification: **09.09.87**

(51) Int. Cl.$^4$: **C 08 F 10/00**, C 08 F 4/64

(21) Application number: **83300705.7**

(22) Date of filing: **11.02.83**

(54) **Catalyst composition and process for polymerizing olefins.**

(30) Priority: **12.02.82 JP 19686/82**

(43) Date of publication of application:
**24.08.83 Bulletin 83/34**

(45) Publication of the grant of the patent:
**09.09.87 Bulletin 87/37**

(84) Designated Contracting States:
**AT BE DE FR GB IT NL SE**

(56) References cited:
**GB-A-1 271 411**
**GB-A-1 387 888**
**US-A-3 186 977**
**US-A-3 264 277**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Kashiwa, Norio**
**2-9, Muronoki-cho 1-chome**
**Iwakuni-shi Yamaguchi-ken (JP)**
Inventor: **Kioka, Mamoru**
**3-6, Misono 1-chome**
**Ohtake-shi Hiroshima-ken (JP)**
Inventor: **Ushida, Yoshihisa**
**3-5, Misono 1-chome**
**Ohtake-shi Hiroshima-ken (JP)**

(74) Representative: **Myerscough, Philip Boyd et al**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 086 643 B1

## Description

This invention relates to a process for producing an olefin polymer (sometimes denoting an olefin copolymer as well) by the polymerization (sometimes denoting copolymerization as well) of olefins, and a catalyst composition used therefor. Particularly, it relates to a process for producing olefin polymers which when applied to the polymerization of α-olefins having at least 3 carbon atoms, can give highly stereospecific polymers in high yields.

Many proposals have already been made as to a method for producing solid catalyst components containing magnesium, titanium, a halogen and an electron donor as essential ingredients. It is also known that when utilized for the polymerization of α-olefins having at least 3 carbon atoms, the above solid catalyst components can give highly stereospecific polymers with high catalytic activity. Many of them, however, are still desired to be improved in regard to their activity or the stereospecificity of the resultant polymers.

For example, in order to obtain olefin polymers of high quality without performing after-treatment of the polymers after the polymerization, the ratio of the stereospecific polymer formed should be very high and the yield of the polymer per unit weight of the transition metal should be sufficiently high. Some of the previously proposed techniques may be said to be on a fairly high level from the aforesaid viewpoint when applied to the production of certain polymers. But in view of the residual halogen content of the polymer which has to do with the rusting of molding machines, few can be said to exhibit sufficient performance. In addition, many of them have the defect that in the production of polymers having a high melt index, a considerably large amount of hydrogen must be used.

For example, GB—A—1,387,890 (corresponding to JP—A—16986/1973) proposes a process for producing a stereospecific polymer by the polymerization of α-olefins in the presence of a catalyst composed of an addition reaction product between an electron donor selected from the group of oxygen-containing organic or inorganic acid esters and a trialkyl aluminum compound or an alkyl aluminum compound containing two or more aluminum atoms linked to each other through an O or N atom, and a component which may include a titanium catalyst component containing magnesium, titanium, halogen and an electron donor. The British Patent broadly exemplifies esters of aliphatic, alicyclic and aromatic mono- and polycarboxylic acids, esters of ketoalkoxy or amino acids, and esters of inorganic acids such as carbonic acid, phosphorous acid, sulfuric acid, phosphoric acid and silicic acid. It also states that the electron donor in the titanium catalyst component may be the same ester donors as exemplified above or another electron donor such as an alcohol or an ether.

US—A—4,329,253 (corresponding to JP—A—145708/1980) proposes a process for the polymerization of olefins by using a catalyst composition composed of an aluminum-containing catalyst component consisting of the reaction product of an organoaluminum compound and an electron donor and a titanium catalyst component containing magnesium, titanium, halogen and an electron donor. This patent document broadly exemplifies ethers, esters, ketones, phenols, amines, amides, imines, nitriles, phosphines, phosphites, stibines, arsines, phosphoramides and alcoholates as the electron donor.

JP—A—26904/1981 proposes a process for the production of highly stereospecific α-olefin polymers using a catalyst composed of (a) a titanium catalyst component containing magnesium, titanium, halogen and an electron donor obtained by reacting a magnesium-containing compound, at least two compounds having different modes of bonding selected from the group consisting of compounds having at least one N, O, P or S atom, (b) an organoaluminum catalyst component and (c) an electron donor having at least one of N, O, P, and S atoms. This patent document broadly exemplifies alcohols, phenols, ethers, aldehydes, ketones, acetals, ketenes, quinones, carbonic acid, carbonic acid esters, carboxylic acids, anhydrides thereof, carboxylic acid esters, acid halides, lactones, silanols, siloxanes, boric acid derivatives, silicic acid derivatives, O-containing heterocyclic compounds, hydroxy acid derivatives, alkoxy acid derivatives, and oxo acid derivatives as the O-containing compounds, and phosphoric acid, phosphorous acid, metaphosphoric acid, phosphonic acids, phosphinic acids, phosphonous acids, alkylphosphoric acids and alkylphosphorous acids as the P-containing compounds.

When the catalyst systems specifically disclosed in these patent documents are comprehensively considered from the viewpoint of catalytic activity and stereospecificity, it is still difficult to conclude that they give entirely satisfactory results. In particular, they do not give sufficient stereospecificity indices within a molecular weight range which can be utilized industrially.

The present inventors undertook investigations in order to provide a further improved process for the production of an olefin polymer or copolymer. These investigations have led to the discovery that a catalyst composed of (A), (B) and (C) components described below which requires a combination of a specified ester selected from (a), (b) and (c) as an electron donor in the titanium catalyst component and a specified phosphorous acid ester as a third catalyst component has a further improved excellent catalytic performance, and that with this catalyst system, there can be provided a process for the polymerization of olefins, in which the catalytic activity of the catalyst is high, and a polymer having a high melt index can be produced by using a small amount of hydrogen.

According to the invention there is provided a catalyst composition for use in the polymerization of at least one olefin, optionally with up to 5 mole % of a diolefin, said catalyst composition being composed of

(A) a titanium catalyst component containing magnesium, titanium, halogen and an electron donor as

essential ingredients.

(B) an organoaluminium compound, and

(C) an ester of an inorganic acid characterized in that the electron donor of (A) is selected from:

(a) ester of polyfunctional compounds selected from polycarboxylic acids having 5 to 36 carbon atoms, polyhydroxy compounds having 6 to 28 carbon atoms and hydroxy-substituted carboxylic acids having 10 to 28 carbon atoms,

(b) monocarboxylic acid esters of the formula RCOOR′ in which each of R and R′ represents a hydrocarbyl group having 1 to 20 carbon atoms, and at least one of them represents a branched-chain group, an alicyclic group, or an aryl ring-containing linear group and

(c) carbonic acid esters having 3 to 18 carbon atoms, and in that (C) is an ester of phosphorous acid with an alcohol of 2 to 4 carbon atoms.

The titanium catalyst component (A) preferably contains a magnesium halide having lower crystallinity than commercial magnesium halides, has a specific surface area of at least 3 $m^2/g$, preferably 40 to 1000 $m^2/g$, more specifically 80 to 800 $m^2/g$, and does not substantially change in composition upon washing with hexane at room temperature. Preferably, the highly active titanium catalyst component (A) has the following halogen/titanium atomic ratio, electron donor/titanium mole ratio and magnesium/titanium atomic ratio. The halogen/titanium atomic ratio is preferably from 5 to 200, more preferably from 5 to 100; the electron donor/titanium mole ratio is preferably from 0.1 to 10, more preferably from 0.2 to 6; and the magnesium/titanium atomic ratio is preferably from 2 to 100, more preferably from 4 to 50.

The highly active titanium catalyst component (A) used in this invention may further contain another component, such as metals, elements, functional groups, and electron donors other than the aforesaid components (a), (b) and (c). It may also contain an organic or inorganic diluent such as a silicon compound, an aluminum compound or a polyolefin.

The titanium catalyst component (A) is obtained by contacting a magnesium compound or metallic magnesium, a titanium compound and the electron donor. If desired, other reagents such as compounds of silicon or aluminum may be used together.

Methods for producing such a titanium catalyst component (A) are known *per se.* It can be produced, for example, in accordance with the methods disclosed in JP—A—108385/1975 and JP—A—20297/1976 (these correspond to DE—A—2,504,036) JP—A—126590/1975 (corresponding to US—A—4,069,169), JP—A—28189/1976 (corresponding to US—A—4,076,924), JP—A—64586/1976, JP—A—92885/1976 (corresponding to US—A—4,085,276), JP—A—136625/1976, JP—A—87489/1977 (corresponding to US—A—4,250,285), JP—A—100596/1977, JP—A—147688/1977 (corresponding to US—A—4,232,139, JP—A—104593/1977 (corresponding to US—A—4,143,223), JP—A—2580/1978 (corresponding to GB—A—1,554,340), JP—A—40093/1978 (corresponding to GB—A—1,554,248), JP—A—43094/1978, JP—A—135102/1980 and JP—A—135103/1981 (these two correspond to US—A—4,330,649), JP—A—11908/1981 (corresponding to EP—A—22,675) and JP—A—18606/1981 (corresponding to EP—A—23,425).

Several examples of these methods for producing the titanium catalyst component (A) are briefly described below.

(1) A magnesium compound or a complex of a magnesiuum compound with an electron donor selected from the group consisting of (a), (b) and (c) is pulverized or not pulverized in the presence or absence of an electron donor, a pulverization aid, etc., and pretreated or not pre-treated with an electron donor and/or an organoaluminum compound or a reaction aid such as a halogen-containing silicon compound. The resulting solid is reacted with a titanium compound which is liquid under the reaction conditions. The above electron donor should be used at least once.

(2) A liquid form of a magnesium compound having no reducing ability is reacted with a liquid titanium compound in the presence of an electron donor selected from the group consisting of (a), (b) and (c) to precipitate a solid titanium composition.

(3) The product obtained in (2) is reacted further with a titanium compound.

(4) The product obtained in (1) or (2) is reacted further with an electron donor selected from (a), (b) and (c) or another electron donor and a titanium compound.

(5) A magnesium compound or a complex of a magnesium compound with an electron donor is pulverized in the presence or absence of an electron donor, a pulverization aid, etc. and in the presence of a titanium compound, and then pre-treated or not pre-treated with an electron donor selected from (a), (b) and (c) and/or an organoaluminum compound or a reaction aid such as a halogen-containing silicon compound. The resulting solid is treated with a halogen, a halogen compound or an aromatic hydrocarbon. The electron donor should be used at least once.

(6) The aforesaid compound is treated further with a halogen or a halogen compound.

Among these catalyst components, those obtained by using a liquid titanium halide in the catalyst preparation, or those obtained by using a halogenated hydrocarbon during or after the action of the titanium compound are especially preferred.

Preferred examples of the esters (a) of polyfunctional compounds used as a constituant of the highly active titanium catalyst component (A) in this invention are $C_5$—$C_{36}$ compounds represented by the following formula

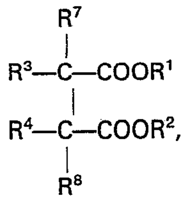 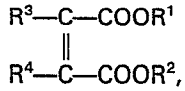 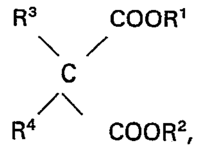 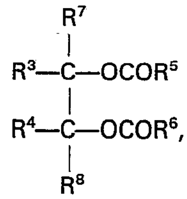 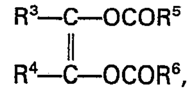

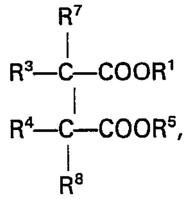 or 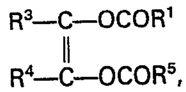

wherein $R^1$ represents a hydrocarbon group having 1 to 20 carbon atoms, each of $R^2$, $R^5$, $R^6$, $R^7$ and $R^8$ represent hydrogen or a hydrocarbon group having 1 to 20 carbon atoms, each of $R^3$ and $R^4$ represents hydrogen or a hydrocarbon group having 1 to 20 carbon atoms, preferably at least one of them being a hydrocarbon group, or $R^3$ and $R^4$ may be linked to each other to form an aromatic or alicyclic ring, or $R^3$ and $R^4$ may be linked to each other through a hetero atom such as N, O or S to form a heterocyclic ring, and $R^1$ through $R^8$ may be substituted by a substituent containing a hetero atom such as N, O or S.

Diesters of dicarboxylic acids in which at least one of $R^1$ and $R^2$ is an alkyl group having at least 2 carbon atoms are especially preferred.

Specific examples of the preferred polycarboxylic acid esters having 5 to 36 carbon atoms include aliphatic polycarboxylic acid esters having 5 to 36 carbon atoms such as diethyl succinate, dibutyl succinate, diethyl methylsuccinate, diisobutyl α-methylglutarate, dibutyl malonate, diethyl methylmalonate, diethyl ethylmalonate, diethyl isopropylmalonate, diethyl butylmalonate, diethyl phenylmalonate, diethylmalonate, diethyl allylmalonate, diethyl diisobutylmalonate, diethyl di-n-butylmalonate, dimethyl maleate, monooctyl maleate dioctyl maleate, dibutyl maleate, dibutyl butylmaleate, diethyl butylmaleate, diisopropyl β-methylglutarate, diallyl ethylsuccinate, di(2-ethylhexyl) fumarate diethyl, itaconate, dibutyl itaconate, dioctyl citraconate and dimethyl citraconate; alicyclic polycarboxylic acid esters having 9 to 29 carbon atoms such as diethyl 1,2-cyclohexanedicarboxylate, diisobutyl 1,2-cyclohexanedicarboxylate, diethyl tetrahydrophthalate and diethyl bicyclo[2.2.1]heptene-2,3-dicarboxylate; aromatic polycarboxylic acid esters having 10 to 32 carbon atoms such as monoethyl phthalate, dimethyl phthalate, methylethyl phthalate, monoisobutyl phthalate, mono-n-butyl phthalate, diethyl phthalate, ethylisoubutyl phthalate, ethyl-n-butyl phthalate, di-n-propyl phthalate, diisopropyl phthalate, di-n-butyl phthalate, diisobutyl phthalate, di-n-heptyl phthalate, di-2-ethylhexylphthalate, di-n-octyl phthalate, dineopentyl phthalate, didecyl phthalate, benzylbutyl phthalate, diphenyl phthalate, diethyl naphthalenedicarboxylate, dibutyl naphthalenedicarboxylate, triethyl trimellitate and dibutyl trimellitate; and esters of heterocyclic polycarboxylic acids such as 3,4-furanedicarboxylic acid.

Other examples of the polycarboxylic acid ester which can be supported in the titanium catalyst component are esters of long-chain dicarboxylic acid such as di-ethyl adipate, diisobutyl adipate, diisopropyl sebacate, di-n-butyl sebacate, di-n-octyl sebacate and di-2-ethyl-hexyl sebacate.

Specific examples of preferred species of the polyhydroxy compound esters having 6 to 28 carbon atoms include 1,2-diacetoxybenzene, 1-methyl-2,3-diacetoxybenzene, 2,3-diacetoxynaphthalene, ethylene glycol dipivalate and butanediol pivalate.

Examples of esters of the hydroxy-substituted carboxylic acids having 10 to 28 carbon atoms are ethyl benzoylsalicylate, isobutyl acetylsalicylate and methyl acetylsalicylate.

Of these esters (a) of polyfunctional compounds, those represented by the above-given formulae are preferred. More preferred are esters formed between phthalic acid, hydrophthalic acid, nadic acid, maleic acid, substituted malonic acid, and alcohols having at least 2 carbon atoms, for example 2 to 16 carbon atoms. Diesters of phthalic acid with alcohols having at least 2 carbon atoms, for example 2 to 10 carbon atoms, are especially preferred.

In the monocarboxylic acid esters (b) of formula RCOOR′ wherein each of R and R′ represents a hydrocarbyl group having 1 to 20 carbon atoms, and at least one of them represents a branched-chain group, preferably a branched-chain group having 3 to 10 carbon atoms, an alicyclic group, preferably an alicyclic group having 5 to 10 carbon atoms, or an aryl ring-containing linear group, preferably an aryl ring-containing linear group having 7 to 15 carbon atoms, specific examples of the branched-chain group, the alicyclic group or the aryl ring-containing linear group may, for example, be

$(CH_3)_2CH-$, $C_2H_5CH(CH_3)-$, $(CH_3)_2CHCH_2$, $(CH_3)_3C-$,

$C_2H_5CH(CH_3)CH_2-$, 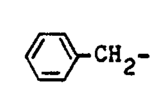, 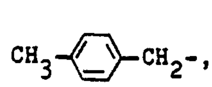, 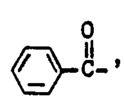, 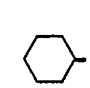 and 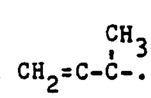.

If any one of R and R' represents the above groups, the other may be the above groups or another hydrocarbyl group such as a straight-chain or cyclic hydrocarbyl group.

Specific examples include various monoesters having 5 to 20 carbon atoms of dimethylacetic acid, trimethylacetic acid, α-methylbutyric acid, β-methylbutyric acid, methacrylic acid and benzolyacetic acid, and various monocarboxylic acid esters having 5 to 20 carbon atoms of alcohols such as isopropanol, isobutyl alcohol, and tert-butyl alcohol.

Examples of the carbonic acid esters having 3 to 18 carbon atoms, (c), used as an ingredient of the highly active titanium catalyst component (A) in this invention include diethyl carbonate, ethylene carbonate, diisopropyl carbonate, phenylethyl carbonate and di-phenyl carbonate.

In supporting these electron donors, they need not always to be used as starting materials, and it is possible to use compounds convertible to these esters in the course of preparing the titanium catalyst component, and to convert them into the esters in the preparation step.

An electron donor other than (a), (b) or (c) may be present together in the titanium catalyst component. But if it is present in too large an amount, adverse effects will be exerted. Hence, its amount should be adjusted to a small one.

The magnesium compound used in preparing the solid titanium catalyst component (A) in this invention is a magnesium compound with or without a reducing ability. Examples of the former are magnesium compounds having a magnesium-carbon bond or a magnesium-hydrogen bond, such as dimethyl magnesium, diethyl magnesium, dipropyl magnesium, dibutyl magnesium, diamyl magnesium, dihexyl magnesium didecyl magnesium, ethyl magnesium chloride, propyl magnesium chloride, butyl magnesium chloride, hexyl magnesium chloride, amyl magnesium chloride, butyl ethoxy magnesium, ethyl butyl magnesium and butyl magnesium hydride. These magnesium compounds may be used in the form of complexes with organoaluminum, and may be liquid or solid.

On the other hand, examples of the magnesium compound having no reducing ability include magnesium halides such as magnesium chloride, magnesium bromide, magnesium iodide and magnesium fluoride; alkoxy magnesium halides such as methoxy magnesium chloride, ethoxy magnesium chloride, isopropoxy magnesium chloride, butoxy magnesium chloride and octoxy magnesium chloride; aryloxy magnesium halides such as phenoxy magnesium chloride an methylphenoxy magnesium chloride; alkoxy magnesiums such as ethoxy magnesium, isopropoxy magnesium, butoxy magnesium, n-octoxy magnesium and 2-ethylhexoxy magnesium; aryloxy magnesiums such as phenoxy magnesium and dimethylphenoxy magnesium; and magnesium carboxylates such as magnesium laurate and magnesium stearate. These magnesium compounds having no reducing ability may be those derived from the aforesaid magnesium compounds having a reducing ability, or derived during the preparation of the catalyst component. For example, magnesium compounds having no reducing ability may be obtained by contacting magnesium compounds having a reducing ability with such compounds as polysiloxane compounds, halogen-containing silane compounds, halogen-containing aluminum compounds, ester and alcohols. The above magnesium compounds may be complexes or compositions with other metals or mixtures with other metal compounds. Or they may be mixtures of two or more of these compounds. Among them, the magnesium compounds having no reducing ability are preferred. Especially preferred are the halogen-containing magnesium compounds, above all magnesium chloride, alkoxy magnesium chlorides and aryloxy magnesium chlorides.

There are various titanium compounds used in the preparation of the solid titanium catalyst component (A) in this invention. For example, tetravalent titanium compounds of the formula $(Ti(OR)_gX_{4-g}$ (R is a hydrocarbon group, such as an alkyl group having 1 to 8 carbon atoms, X is a halogen, and $0 \leqq g \leqq 4$) are suitable. Specific examples may include titanium tetrahalides such as $TiCl_4$, $TiBr_4$ and $TiI_4$; alkoxy titanium trihalides such as $Ti(OCH_3)Cl_3$, $Ti(OC_2H_5)Cl_3$, $Ti(O\ n\text{-}C_4H_9)Cl_3$, $Ti(OC_2H_5)Br_3$ and $Ti(O\ iso\text{-}C_4H_9)Br_3$; alkoxy titanium dihalides such as $Ti(OCH_3)_2Cl_2$, $Ti(OC_2H_5)_2Cl_2$, $Ti(O\ n\text{-}C_4H_9)_2Cl_2$ and $Ti(OC_2H_5)_2Br_2$; trialkoxy titanium monohalides such as $Ti(OCH_3)_3Cl$, $Ti(OC_2H_5)_3Cl$, $Ti(O\ n\text{-}C_4H_9)_3Cl$ and $Ti(OC_2H_5)_3Br$; and tetraalkoxy titaniums such as $Ti(OCH_3)_4$, $ti(OC_2H_5)_4$ and $Ti(O\ n\text{-}C_4H_9)_4$. Of these, the halogen-containing titanium compounds are preferred. Especially preferred are titanium tetrahalides, above all titanium tetrachloride. These titanium compounds may be used singly or as a mixture. Or they may be used as diluted in hydrocarbons, halogenated hydrocarbons.

The amounts of the titanium compound, the magnesium compound and the electron donor selected from (a), (b) and (c), and the other electron donors which may be used as required (e.g., alcohols, phenols or mono-carboxylic acid esters) and other optional compounds such as silicon compounds and aluminum compounds may be properly selected. In the preparation of the titanium catalyst component (A), the amounts of the magnesium compound, the titanium compound and the electron donor (a), (b) or (c) are, for example, such that 0.05 to 5 moles of the electron donor and 0.05 to 500 moles, of the titanium compound are used per mole of the magnesium compound.

In the present invention, olefins are polymerized or copolymerized by using a combination catalyst composed of the aforesaid titanium catalyst component (A), the organoaluminum compound (B), and the phosphorous acid ester (C) as a third component described hereinafter.

As examples of the component (B), the following can be cited.

(i) Organoaluminum compounds having at least one Al-carbon bond in the molecule, for example organoaluminum compounds expressed by the following formula

$$R^1_mAl(OR^2)_nH_pX_q$$

wherein $R^1$ and $R^2$ are hydrocarbon groups, such as those containing 1 to 15 carbon atoms, preferably 1 to 4 carbon atoms, and may be identical or different, X is a halogen atom, m is more than 0 but no more than 3, n is from 0 to less than 3 p is from 0 to less than 3 and q is from 0 to less than three provided that $m + n + p + q = 3$.

Examples of the hydrocarbon group are alkyl groups having 1 to 10 carbon atoms and aryl groups having 6 to 15 carbon atoms.

(ii) Complex alkylated products of metals of Group Ia and aluminum represented by the following general formula

$$M^1AlR^1_4$$

wherein $M^1$ is Li, Na or K, and $R^1$ is as defined above.

The following compounds can be exemplified as the organoaluminum compounds belonging to (i) above.

Compounds of the general formula

$$R^1_mAl(OR^2)_{3-m}$$

wherein $R^1$ and $R^2$ are as defined above, and m is preferably a number represented by $1.5 \leqq m \leqq 3$; compounds of the general formula

$$R^1_mAlX_{3-m}$$

wherein $R^1$ is as defined above, X is a halogen and m is preferably a number represented by $0 < m < 3$; compounds of the general formula

$$R^1_mAlH_{3-m}$$

wherein $R^1$ is as defined above, and m is preferably $2 \leqq m \leqq 3$; and

$$R^1_mAl(OR^2)_nX_q$$

wherein $R^1$ and $R^2$ are as defined above. X is a halogen, and $0 < m \leqq 3$, $0 \leqq n < 3$, $0 \leqq q < 3$, and $m + n + q = 3$.

Specific examples of the aluminum compounds belonging to (i) above include trialkyl aluminums such as triethyl aluminum and tributyl aluminum; trialkenyl aluminums such as triisoprenyl aluminum; partially alkoxylated alkyl aluminums, for example dialkyl aluminum alkoxides such as diethyl aluminum ethoxide and dibutyl aluminum butoxide, alkyl aluminum, sesquialkoxides such as ethyl aluminum sesquiethoxide and butyl aluminum sesquibutoxide, and compounds having an average composition of the formula $R^1_{2.5}Al(OR^2)_{0.5}$; partially halogenated alkyl aluminums, for example dialkyl aluminum halides such as diethyl aluminum chloride, dibutyl aluminum chloride and diethyl aluminum bromide, alkyl aluminum sesquihalides such as ethyl aluminum sesquichloride, butyl aluminum sesquichloride and ethyl aluminum sesquibromide, and alkyl aluminum dihalides such as ethyl aluminum dichloride, propyl aluminum dichloride and butyl aluminum dibromide; partially hydrogenated alkyl aluminums, for example, dialkyl aluminum hydrides such as diethyl aluminum hydride and dibutyl aluminum hydride and alkyl aluminum dihydrides such as ethyl aluminum dihydride and propyl aluminum dihydride; and partially alkoxylated and halogenated alkyl aluminums such as ethyl aluminum ethoxy chloride, butyl aluminum butoxy chloride, and ethyl aluminum ethoxy bromide.

$LiAl(C_2H_5)_4$ and $LiAl(C_7H_{15})_4$ may be cited as examples of the compounds belonging to (ii) above.

There may also be used organoaluminum compounds in which at least two aluminums are bonded through an oxygen or nitrogen atom, as compounds similar to (i). Examples of such compounds are $(C_2H_5)_2AlOAl(C_2H_5)2$, $(C_4H_9)_2AlOCl(C_4H_9)_2$,

and $(C_2H_5)_2AlNAl(C_2H_5)_2)$.
|
$C_2H_5$

Among these, trialkyl aluminums and the alkyl aluminums in which two or more aluminums are bonded are preferred.

The component (C) is an ester of phosphorous acid with an alcohol having 2 to 4 carbon atoms. It may be a mixed ester with another hydroxy compound so long as it contains an alcohol moiety having 2 to 4 carbon atoms. Specific examples of the component (C) are triethyl phosphite, tri-n-propyl phosphite, triisopropyl phosphite, tri-n-butyl phosphite, triisobutyl phosphite, diethyl n-butyl phosphite and diethyl

phenyl phosphite. Of these, the ethyl esters, above all triethyl phosphite are preferred.

Good results cannot be obtained by using phosphates or other phosphites.

In the process of this invention, olefins are polymerized or copolymerized, or an olefin is copolymerized with up to 5 mole% or a diolefin, in the presence of the catalyst composed of (A), (B) and (C). In a preferred mode of the process, olefins having 2 to 10 carbon atoms such as ethylene, propylene, 1-butene, 4-methyl-1-pentene and 1-octene are polymerized or copolymerized, or at least one of these olefins is copolymerized with at least one diolefin, for example a conjugated diene such as butadiene, 1,3-pentadiene and isoprene, or a non-conjugated diene such as 1,4-pentadiene, 1,5-hexadiene, 1,4-hexandiene, 1,7-octadiene, vinyl norbornene and ethylidene norbornene. The polymerization or copolymerization of olefins having 3 to 6 carbon atoms, and the copolymerization of at least one of these olefins with ethylene and/or a diolefin, for example up to 10 mole% of ethylene and/or a diolefin are especially preferred.

The copolymerization may be carried out in any of random and block copolymerization modes. The polymerization or copolymerization may be carried out in the liquid or vapor phase.

In the case of the liquid-phase polymerization an inert solvent such as hexane, heptane or kerosene may be used as a reaction medium, but the olefin itself may be used as the reaction medium.

In the practice of the process of this invention, the amount of the catalyst used may be properly selected. Preferably, per liter of the volume of the reaction system (the liquid-phase reaction system in the case of the liquid-phase reaction, and the vapor-phase reaction system in the case of the vapor-phase reaction), the proportion of the component (A) is 0.0001 to 1.0 millimole calculated as the titanium atom, the proportion of the aluminum atom in the component (B) is 1 to 2,000, preferably 5 to 500 moles, per mole of the titanium atom in component (A), and the proportion of the component (C), calculated as the P atom, is 0.001 to 10 moles, preferably 0.01 to 2 moles, especially preferably 0.05 to 1 mole, per mole of the aluminum atom in the component (B).

The catalyst components (A), (B) and (C) may be contacted with each other during or before the polymerization. In the case of contacting before the polymerization, the three components may be contacted simultaneously. Or any two of them may be selected and contacted with each other and then further contacted with the remaining one. Or two or three of them may be partly taken out individually and contacted with each other, and then further contacted with the remaining one component and/or the remainder. The contacting of the components before the polymerization may be carried out in an atmosphere of an inert gas or an olefin.

The temperature at which the olefin is polymerized is, for example, 20 to 200°C, preferably 50 to 180°C, and the pressure for olefin polymerization is, for example, from atmospheric pressure to 98 MPa (100 $kg/cm^2$), preferably 0.2 to 4.9 MPa (2 to 50 $kg/cm^2$). The polymerization can be carried out in any of batchwise, semi-continuous and continuous modes. It is also possible to carry out the polymerization in two or more stages having different reaction conditions.

In particular, when the invention is applied to the stereospecific polymerization or copolymerization of α-olefins having at least 3 carbon atoms, polymers or copolymers having a high stereospecificity index can be produced with a high catalytic efficiency. In the polymerization of olefins with solid catalyst components previously suggested, an attempt to obtain a polymer having a high melt index by using hydrogen tends to result in a fairly great reduction in stereospecificity. The use of this invention can reduce this tendency. Furthermore, since the solid catalyst component is highly active and the amount of the polymer yielded per unit weight of the solid catalyst component is larger than that obtained with the use of a previously proposed solid catalyst component when polymers having the same stereospecificity index are to be obtained, the catalyst residue, especially the amount of halogen, in the polymer can be reduced. This not only makes it possible to omit the catalyst removing operation but also to markedly inhibit the rusting tendency of a mold in a molding process.

Furthermore, the melt index of the polymer can be changed by using a smaller amount of a molecular weight controlling agent such as hydrogen than in the case of using conventional catalyst systems.

The following examples illustrate the invention in greater detail.

## Example 1

[Preparation of solid catalyst component (A)]

The inside of a high speed stirred device (made by Tokushu Kika Kogyo K.K.) having an inside capacity of 2 liters was fully purged with $N_2$, and then 700 ml of purified kerosene, 10 g of commercial $MgCl_2$, 24.2 g of ethanol and 3 g of Emasol 320 (a trademark for sorbitan distearate manufactured by Kao-Atlas Co., Ltd.) were charged into the device. The temperature of the system was raised with stirring, and these materials were stirred at 120°C and 800 rpm for 30 minutes. With stirring at high speed, the mixture was transferred through a Teflon® tube having an inside diameter of 5 mm into a 2-liter glass flask (equipped with a stirrer) containing 1 liter of purified kerosene cooled at −10°C. The resultant solid was collected by filtration and washed fully with hexane to obtain a carrier.

The carrier (7.5 g) was suspended in 150 ml of titanium tetrachloride at room temperature and 1.3 ml of diisobutyl phthalate was suspended. The temperature was raised to 120°C, and the mixture was stirred at 120°C for 2 hours.

The solid portion was collected by filtration, again suspended in 150 ml of titanium tetrachloride, and

again stirred at 130°C for 2 hours. The solid reaction product was collected by filtration from the resulting reaction mixture and washed with a sufficient amount of purified hexane to give a solid catalyst component (A). This component contained, as atoms, 2.3% by weight of titanium, 64.0% by weight of chlorine and 21.0% by weight of magnesium.

(Polymerization)

A 2-liter autoclave was charged with 750 ml of purified hexane, and in an atmosphere of propylene at room temperature, 2.51 mmoles of triethyl aluminum, 0.837 mmole of triethyl phosphite and 0.015 mmole, calculated as the titanium atom, of the catalyst component (A) were introduced into the autoclave. After introducing 200 ml of hydrogen, the temperature was raised to 70°C, and propylene was polymerized for 2 hours. During the polymerization, the pressure was maintained at 0.7 MPa gauge (7 $kg/cm^2 \cdot G$).

After the polymerization, the resulting slurry containing the polymer formed was filtered to separate it into a white powdery polymer and a liquid portion. After drying, the amount of the white powdery polymer yielded was 203.6 g. The polymer had a boiling n-heptane extraction residue of 97.1%, an MI of 150, and an apparent density of 0.45 g/ml. On the other hand, concentrating the liquid portion gave 3.1 g of a solvent-soluble polymer. Hence, the activity was 13,800 g-PP/mmole-Ti, and the total II (isotacticity index) was 95.6%.

## Example 2

[Preparation of catalyst component (A)]

Anhydrous magnesium chloride (20 g), 8.0 ml of diisobutyl phthalate, and 3.0 ml of a silicone oil (TSS—451, 20 cs; a product of Shin-etsu Chemical Co., Ltd.) as a pulverisation aid were charged into a stainless steel (SUS—32) ball mill having a capacity of 800 ml and an inside diameter of 100 ml containing 2.8 kg of stainless steel (SUS—32) balls each having a diameter of 15 mm in an atmosphere of nitrogen, and contacted for 24 hours at an impact acceleration of 7G. Fifteen grams of the resultant co-pulverization product was suspended in 150 ml of titanium tetrachloride and contacted with stirring at 110°C for 2 hours. The solid portion was collected by filtration, and wahsed sufficiently with purified hexane until no free titanium compound was detected from the washing. The washed produce was then dried to give a catalyst component (A). This component contained, as atoms, 3.8% by weight of titanium, 59.0% by weight of chlorine and 16.0% by weight of magnesium.

(Polymerization)

Propylene was polymerized by the method described in Example 1. The results are shown in Table 1.

## Example 3

[Preparation of solid catalyst component (A)]

Anhydrous magnesium chloride (20 g), 8.0 ml of diisobutyl phthalate, and 3.3 ml of titanium tetrachloride and 3.0 ml of a silicone oil (TSS—451), a product of Shin-etsu Chemical Co., Ltd.; 20 cs) as a pulverisation aid were charged into a stainless steel (SUS—32) ball mill having a capacity of 800 ml and an inside diameter of 100 mm containing 2.8 kg of stainless steel (SUS—32) balls each having a diameter of 15 mm under an atmosphere of nitrogen, and contacted for 24 hours at an impact acceleration of 7G. Fifteen grams of the resulting co-pulverisation product was suspended in 150 ml of 1,2-dichloroethane, and contacted with stirring at 80°C for 2 hours. The solid portion was collected by filtration, and washed fully with purified hexane until no free 1,2-dichloroethane was detected from the washing. The washed product was dried to give a catalyst component (A). This component contained, as atoms, 3.2% by weight of titanium, 60.0% by weight of chlorine and 17.0% by weight of magnesium.

(Polymerization)

Propylene was polymerized by the method described in Example 1. The results are shown in Table 1.

## Examples 4, 5 and 6

[Preparation of solid catalyst component (A)]

Solid catalyst components (a) were prepared by the method described in Example 1 except that 1.3 ml of diisobutyl phthalate described in Example 1 was changed to 1.0 ml of diethyl phthalate, 1.8 ml of di-n-heptyl phthalate and 1.4 ml of diethyl n-butylmalonate, respectively.

(Polymerization)

Propylene was polymerized by using the method described in Example 1. The results are shown in Table 1.

## Example 7

[Preparation of solid catalyst component (A)]

Solid catalyst component (A) was prepared by the method described in Example 3 except that 8.0 ml of diisobutyl phthalate described in Example 3 was changed to 5.9 ml of diethyl 2-allylmalonate.

(Polymerization)

Propylene was polymerized by the method described in Example 1. The results are shown in Table 1.

Example 8

Propylene was polymerized by the method described in Example 1 using the solid catalyst component (A) described in Example 1 except that tributyl phosphite was used instead of the triethyl phosphite described in the section of (Polmerization) in Example 1. The results are shown in Table 1.

Comparative Example 1

[Preparation of solid catalyst component (A)]

A Ti-containing catalyst component was prepared by the method described in Example 14 of JP—A—135103/1981 using a carrier prepared by the method described in Example 1. Specifically, the solid catalyst component (A) was prepared in accordance with the method described in Example 1 of this application except that 1.3 ml of diisobutyl phthalate described in Example 1 of this application was changed to 1.83 ml of ethyl benzoate, and the temperature at which to perform the contacting reaction with titanium tetrachloride (120°C and 130°C) were changed to 100°C and 110°C, respectively.

(Polymerization)

Propylene was polymerized by the same method as in Example 1. The results are shown in Table 1.

TABLE 1

| Example | Solid catalyst component (A) | | | | Polymerization conditions and results | | | | | | |
|---|---|---|---|---|---|---|---|---|---|---|---|
| | Ester | Composition of the catalyst (wt.%) | | | Mole ratio of Al to the phosphorus compound | Amount of the powder yielded (g) | Amount of the hexane soluble polymer (g) | Boiling heptane extraction residue (%) | Activity (g-PP/ mmole-Ti) | II of the entire polymer (%) | MI |
| | | Ti | Cl | Mg | | | | | | | |
| 1 | Diisobutyl phthalate | 2.3 | 64 | 21 | 3 | 203.6 | 3.1 | 97.1 | 13,800 | 95.6 | 151 |
| 2 | Diisobutyl phthalate | 3.8 | 59 | 16 | 3 | 192.3 | 3.3 | 95.7 | 13,000 | 94.1 | 133 |
| 3 | Diisobutyl phthalate | 3.2 | 60 | 17 | 3 | 231.4 | 3.6 | 96.2 | 15,700 | 94.7 | 158 |
| 4 | Diethyl phthalate | 4.0 | 61 | 16 | 3 | 153.4 | 2.4 | 97.2 | 10,400 | 95.7 | 141 |
| 5 | Di-n-heptyl phthalate | 2.1 | 65 | 20 | 3 | 136.8 | 2.1 | 97.3 | 9,300 | 95.8 | 131 |
| 6 | Diethyl n-butylmalonate | 2.6 | 64 | 20 | 3 | 176.3 | 4.6 | 95.6 | 12,100 | 93.2 | 171 |
| 7 | Diethyl 2-allylmalonate | 1.8 | 59 | 20 | 3 | 183.5 | 3.7 | 96.8 | 12,500 | 94.9 | 123 |
| 8 | Diisobutyl phthalate | 2.3 | 64 | 21 | 3 | 142.6 | 5.6 | 94.9 | 9,900 | 91.3 | 89 |
| Comp. Ex. 1 | Ethyl benzoate | | | | 3 | 43.7 | 3.4 | 89.6 | 3,100 | 83.1 | 83 |

**Claims**

1. A catalyst composition for use in the polymeriztion of at least one olefin, optionally with up to 5 mole% of a diolefin, said catalyst composition being composed of

(A) a titanium catalyst component containing magnesium, titanium, halogen and an electron donor as essential ingredients.

(B) an organoaluminum compound, and

(C) an ester of an inorganic acid characterized in that the electron donor of (A) is selected from:

(a) esters of polyfunctional compounds selected from polycarboxylic acids having 5 to 36 carbon atoms, polyhydroxy compounds having 6 to 28 carbon atoms and hydroxy-substituted carboxylic acids having 10 to 28 carbon atoms,

(b) monocarboxylic acid esters of the formula RCOOR' in which each of R and R' represents hydrocarbyl group having 1 to 20 carbon atoms, and at least one of them represents a branched-chain group, an alicyclic group, or an aryl ring-containing linear group and

(c) carbonic acid esters having 3 to 18 carbon atoms, and in that (C) is an ester of phosphorous acid with an alcohol of 2 to 4 carbon atoms.

2. A catalyst composition according to claim 1 wherein the titanium catalyst component (A) has a halogen/titanium atomic ratio of from 5/1 to 200/1, an electron donor/titanium mole ratio of from 0.1/1 to 10/1, and a magnesium/titanium atomic ratio of from 2/1 to 100/1.

3. A catalyst composition according to claim 1 or 2 wherein the organoaluminum compound (B) is an organoaluminum compound selected from

(i) compounds represented by the formula

$$R^1_mAl(OR^2)_nH_pX_q$$

wherein each of $R^1$ and $R^2$ represents a hydrocarbon group having 1 to 15 carbon atoms, X represents a halogen atom, m is more than 0 but no more than 3, n is from 0 to less than 3, p is from 0 to less than 3 and q is from 0 to less than 3 provided that $m + n + p + q = 3$, and

(ii) compounds of the formula

$$M^1AlR^1_4$$

wherein $M^1$ represents Li, Na or K, and $R^1$ is as defined in (i) above.

4. A process for producing an olefin polymer which comprises polymerizing at least one olefin, optionally with up to 5 mole% of a diolefin, in the presence of a catalyst composition as claimed in claim 1, 2 or 3.

5. A process according to claim 1 wherein per liter of the volume of the reaction system, 0.0001 to 1 millimole, calculated as titanium atom, of the component (A) is used, 1 to 2,000 moles, calculated as aluminum atom in the component (B), of the component (B) is used per mole of the titanium atom in the component (A), and 0.001 to 10 moles calculated as the P atom in the component (C), of the component (C) is used per mole of the aluminum atoms in the component (B).

6. A process according to claim 4 or 5 wherein the polymerization is carried out at a temperature of 20 to 200°C and a pressure of atmospheric pressure to 100 kg/cm$^2$ (9.8 MPa).

7. A process according to claim 4, 5 or 6 wherein the olefin has 2 to 10 carbon atoms.

**Patentansprüche**

1. Katalysator zur Verwendung bei der Polymerisation mindestens eines Olefins, gegebenenfalls mit bis zu 5 mol.-% eines Diolefins, der zusammengesetzt ist aus

(A) einer Titankatalysatorkomponente enthaltend Magnesium, Titan, Halogen und einen Elektronendonor als wesentliche Bestandteile,

(B) eine Organoaluminiumverbindung und

(C) einen Ester einer anorganischen Säure, dadurch gekennzeichnet, daß der Elektronendonor von (A) ausgewählt ist aus:

(a) Estern von polyfunktionellen Verbindungen ausgewählt aus Polycarbonsäuren mit 5 bis 36 Kohlenstoffatomen, Polyhydroxyverbindungen mit 6 bis 28 Kohlenstoffatomen und hydroxysubstituierten Carbonsäuren mit 10 bis 28 Kohlenstoffatomen,

(b) Monocarbonsäureester der Formel RCOOR', in der R und R' jeweils für eine Kohlenwasserstoffgruppe mit 1 bis 20 Kohlenstoffatomen stehen und mindestens eines von ihnen eine verzweigkettige Gruppe, ein alicyclische Gruppe oder eine einen Arylring enthaltende lineare Gruppe bedeutet und

(c) kohlensäureestern mit 3 bis 8 Kohlenstoffatomen, und daß (C) ein Ester der phosphorigen Säure mit einem Alkohol von 2 bis 4 Kohlenstoffatomen ist.

2. Katalysator nach Anspruch 1, dadurch gekennzeichnet, daß die Titankatalysatorkomponente (A) ein Halogen/Titan-Atomverhältnis von 5/1 bis 200/1, ein Elektronendonor/Titan-Molverhältnis von 0,1/1 bis 10/1

und ein Magnesium/Titan-Atomverhältnis von 2/1 bis 100/1 aufweist.

3. Katalysator nach Anspruch 1 oder 2, dadurch gekennzeichnet, daß die Organoaluminiumverbindung (B) ausgewählt ist aus

(i) Verbindungen, wiedergegeben durch die Formel

$$R^1{}_mAl(OR^2)_nH_pX_q$$

in der $R^1$ und $R^2$ jeweils eine Kohlenwasserstoffgruppe mit 1 bis 15 Kohlenstoffatomen bedeuten, X für ein Halogenatom steht, m mehr als 0 und nicht mehr als 3, n 0 bis weniger als 3, p 0 bis weniger als 3 und q 0 bis weniger als 3 ist, mit der Maßgabe, daß m + n + p + q = 3 ist und

(ii) Verbindungen der Formel

$$M^1AlR^1{}_4$$

in der $M^1$ Li, Na oder K bedeutet und $R^1$ wie unter (i) oben definiert ist.

4. Verfahren zur Herstellung eines Olefinpolymeren, dadurch gekennzeichnet, daß man mindestens ein Olefin, gegebenenfalls mit bis zu 5 mol.-% eines Diolefins in der Gegenwart eines Katalysators nach Anspruch 1, 2 oder 3 polymerisiert.

5. Verfahren nach Anspruch 1, dadurch gekennzeichnet, daß man je Liter Volumen des Reaktionssystems 0,0001 bis 1 mmol, gerechnet als Titanatom, Komponente (A),. einsetzt, 1 bis 2000 mol, gerechnet als Aluminiumatom in der Komponente (B), der Komponente (B) je mol Titanatom in der Komponente (A) einsetzt sowie 0,001 bis 10 mol, gerechnet als das P-Atom in der Komponente (C), der Komponente (C) je mol Aluminiumatome in der Komponente (B) einsetzt.

6. Verfahren nach Anspruch 4 oder 5, dadurch gekennzeichnet, daß man die Polymerisation bei einer Temperatur von 20 bis 200°C und einem Druck von Atmosphärendruck bis zu 100 kg/cm² (9,8 MPa) durchfürht.

7. Verfahren nach Anspruch 4, 5 oder 6, dadurch gekennzeichnet, daß das Olefin 2 bis 10 Kohlenstoffatome aufweist.

**Revendications**

1. Composition de catalyseur pour utilisation dans la polymérisation d'au moins une oléfine, facultativement avec jusqu'à 5% moles l'une dioléfine, ladite composition de catalyseur étant composée de

(A) un composant catalytique au titane contenant du magnésium, du titane, un halogène et un donneur d'électrons, à titre d'ingrédients essentiels,

(B) un composé organo-aluminique et

(C) un ester d'un acide minéral, caractérisée en ce que le donneur d'électrons de (A) est choisi parmi:

(a) les esters de composés polyfonctionnels choisis parmi les acides polycarboxyliques comportant de 5 à 36 atomes de carbone, les composés polyhydroxyliques comportant de 6 à 28 atomes de carbon et les acides carboxyliques à substituants hydroxyles, comportant de 10 à 28 atomes de carbone,

(b) les esters d'acides monocarboxyliques de formule RCOOR', dans laquelle R est R' représentent chacun un groupe hydrocarboné de 1 à 20 atomes de carbon, et au moins l'un d'eux représente un groupe à chaîne ramifié, un groupe alicyclique ou un groupe linéaire contenant un noyau aryle et

(c) des esters de l'acide carbonique, comportant de 3 à 18 atomes de carbone, et en ce que (c) est un ester de l'acide phosphoreaux avec un alcool comportant de 2 à 4 atomes de carbone.

2. Composition de catalyseur selon la revendication 1, dans laquelle le composant catalytique au titane (A) présente un rapport atomique halogène/titane de 5:1 à 200:1, un rapport molaire donneur d'électrons/titane de 0,1:1 à 10:1 et un rapport atomique magnésium/titane de 2:1 à 100:1.

3. Composition de catalyseur selon la revendication 1 ou 2, dans laquelle le composé organo-aluminique (B) est un composé organo-aluminique choisi parmi

(i) des composés de formule:

$$R^1{}_mAl(OR^2)_nH_pX_q$$

dans laquelle $R^1$ et $R^2$ représentent chacun un groupe hydrocarboné comportant de 1 à 15 atomes de carbone, X représente un atome d'halogène, *m* est supérieur à 0 et non supérieur à 3, *n* vaut de 0 à moins de 3, *p* vaut de 0 à moins de 3 et *q* vaut de 0 à moins de 3, à la condition que m + n + p + q = 3, et

(ii) des composés de formule:

$$M^1AlR^1{}_4$$

dans laquelle $M^1$ représente Li, Na ou K et $R^1$ est tel que défini dans (i) ci-dessus.

4. Procédé de production d'un polymère d'oléfine, qui consiste à polymériser au moins une oléfine, facultativement avec jusqu'à 5% moles d'une dioléfine, en présence d'une composition de catalyseur selon la revendication 1, 2 ou 3.

5. Procédé selon la revendication 4, dans lequel, par litre du volume du système réactionnel, on utilise 0,0001 à 1 millimole, calculée en atomes de titane, du composant (A), on utilise 1 à 2000 moles, calculées en atomes d'aluminium dans le composant (B), du composant (B) par mole d'atomes de titane dans le composant (A), et on utilise 0,001 à 10 moles, calculées en atome de P dans le composant (C), du composant (C) par mole d'atomes d'aluminium dans le composant (B).

6. Procédé selon la revendication 4 ou 5, dans lequel on effectue la polymérisation à une température comprise entre 20 et 200°C et sous une pression comprise entre la pression atmosphérique et 9,8 MPa (100 $kg/cm^2$).

7. Procédé selon la revendication 4, 5 ou 6, dans lequel l'oléfine comporte de 2 à 10 atomes de carbone.